# EUROPÄISCHE PATENTSCHRIFT

(11) **EP 2 923 089 B1**
(45) Veröffentlichungstag und Bekanntmachung des Hinweises auf die Patenterteilung: **18.12.2019**
(21) Anmeldenummer: 13782979.2
(22) Anmeldetag: 25.10.2013
(51) Int. Cl.: F15B 15/14, F15B 1/02, F15B 1/08

(54) **TURBINENVENTILSTELLVORRICHTUNG**
TURBINE VALVE ACTUATOR
DISPOSITIF DE COMMANDE DE VANNE DE TURBINE

(30) Priorität: 22.11.2012 DE 102012022871
(43) Veröffentlichungstag der Anmeldung: 30.09.2015
(73) Patentinhaber: HYDAC Systems & Services GmbH, 66280 Sulzbach (DE)
(72) Erfinder: SCHLEMMER, Kristof, 66740 Saarlouis (DE); PIECHNICK, Martin, 97816 Lohr am Main (DE); BRITZ, Wolfgang, 66701 Beckingen (DE)
(74) Vertreter: Bartels und Partner, Patentanwälte
(86) Internationale Anmeldenummer: PCT/EP2013/003219
(87) Internationale Veröffentlichungsnummer: WO 2014/079528

(56) Entgegenhaltungen:
- EP-A2- 0 151 650
- DE-A1- 2 851 478
- DE-A1- 19 647 483
- DE-A1-102010 053 811
- DE-B3-102004 042 891

## Beschreibung

Die Erfindung betrifft eine Turbinenventilstellvorrichtung zum Ansteuern mindestens einer Ventileinheit eines medienbetriebenen Verbrauchers, wie einer Dampf- oder Gasturbine, mit einem Stellteilantrieb, der ein bewegbares Stellteil, mindestens einen ersten Medienraum und mindestens einen zweiten Medienraum aufweist, wobei ein Druckaufbau im ersten Medienraum eine Bewegung des Stellteils in einer ersten Richtung und ein Druckaufbau im zweiten Medienraum eine Bewegung des Stellteils in einer entgegengesetzten zweiten Richtung zu bewirken sucht, wobei der erste Medienraum mittels einer Versorgungseinrichtung mit einem Fluid in vorgebbaren Mengen versorgbar ist, die mit einer Positioniereinrichtung zusammenwirkt und wobei der zweite Medienraum durch einen Energiespeicher beaufschlagt ist, wobei der Energiespeicher mindestens ein mit einem Vorspanndruck versehener Hydrospeicher ist, der an den zweiten Medienraum permanent angeschlossen ist.

Eine Turbinenventilstellvorrichtung ist im Stand der Technik durch die DE 10 2004 042 891 B3 bekannt. Diese Turbinenventilstellvorrichtung besteht aus einem hydraulischen Arbeitszylinder, wobei eine Kolbenstangeneinheit permanent federbelastet ist, vorzugsweise durch ein Paket von Tellerfedern. Die Kolbenstangeneinheit wird entgegen der Druckkraft der Tellerfedern über den Systemdruck eines Fluidkreises in einer eingefahrenen Stellung gehalten. Bei einem Systemdruckabfall fährt die Kolbenstangeneinheit aus dem Arbeitszylinder aus und betätigt ein Stellventil, das einen Medienstrom zu einem Verbraucher ansteuert und in diesem Fall einen Dampfmassenstrom für den Antrieb einer Dampf- oder Gasturbine unterbindet.

Bei dem bekannten Stellzylinder mit mechanischen Federn muss der Antrieb entsprechend den individuellen Anforderungen des einzelnen Dampfventiltyps ausgelegt und gefertigt werden. Eine nachträgliche Anpassung der Turbinenventilstellvorrichtung an ein anderes Dampfventil ist nicht möglich. Das führt letztlich zu einer umfangreichen Typenvielfalt, die mit hohen Kosten für Entwicklung, Produktion, Lagerung und Vertrieb verbunden ist.

DE 28 51 478 A1 betrifft eine schnell schaltende Antriebsvorrichtung, insbesondere für Hochspannungsschalter, bei welcher Einrichtungen zum Speichern und plötzlichen Freigeben der Schaltenergie bei Beginn des Schaltvorgangs sowie zum Dämpfen der Schaltenergie am Ende des Schaltvorgangs vorgesehen sind. Bei der Antriebsvorrichtung ist ein hydraulisch betätigter doppeltwirkender Antriebskolben mit Kolbenstange in einem Zylinder angeordnet. Der Antriebskolben bildet an seinen beiden Enden zusammen mit den Zylinderböden jeweils ein Sitzventil, welches durch stirnseitige Beaufschlagung des Antriebskolbens mittels Hydraulikflüssigkeit öffenbar bzw. schließbar ist. In der Zylinderwandung ist im Bereich von deren Enden jeweils wenigstens eine Durchtrittsöffnung zu jeweils einem hydraulisch-pneumatischen Energiespeicher vorgesehen, von denen die jeweils eine Durchtrittsöffnung nach Öffnen des dieser benachbarten Sitzventils zum Eintreten von vorgespannter gespeicherter Hydraulikflüssigkeit in die jeweils eine Zylinderkammer für das Beschleunigen des Antriebskolbens und die jeweils andere, gegenüberliegende Durchtrittsöffnung zum Heraustreten der in der jeweils anderen Zylinderkammer befindlichen wieder zu speichernden Hydraulikflüssigkeit unter Verzögern des Antriebskolbens bis zum Schließen des anderen Sitzventils dient.

EP 0 151 650 A2 beschreibt eine Stelleinrichtung zum Ansteuern mindestens einer Ventileinheit eines medienbetriebenen Verbrauchers, wie einer Dampf- oder Gasturbine, mit einem Stellteilantrieb, der ein bewegbares Stellteil, mindestens einen ersten Medienraum und mindestens einen zweiten Medienraum aufweist, wobei ein Druckaufbau im ersten Medienraum eine Bewegung des Stellteils in einer ersten Richtung und ein Druckaufbau im zweiten Medienraum eine Bewegung des Stellteils in einer entgegengesetzten zweiten Richtung zu bewirken sucht, wobei der erste Medienraum mittels einer Versorgungseinrichtung mit einem Fluid in vorgebbaren Mengen versorgbar ist und der zweite Medienraum durch einen Energiespeicher beaufschlagt ist, wobei der Energiespeicher mindestens ein mit einem Vorspanndruck versehener Hydrospeicher ist, der an den zweiten Medienraum permanent angeschlossen ist. Gesteuert durch ein Rückschlagventil ist der zweite Medienraum mit Fluid zum Ausgleich von Leckagen befüllbar.

DE 196 47 483 A1 betrifft eine Zweiwalzenmaschine, insbesondere Hochdruck-Walzenpresse zur Druckbehandlung körnigen Gutes, mit zwei drehbar gelagerten, gegenläufig angetriebenen und durch einen Walzenspalt voneinander getrennten Walzen, wobei eine der beiden Walzen als Festwalze ausgebildet ist, die sich über ihre Lagerböcke direkt gegen die Endwand des Maschinenrahmens abstützt und die andere Walze als Loswalze ausgebildet ist, die sich über ihre beiden zugehörigen Lagerböcke gegen die Hydraulikzylinder eines hydro-pneumatischen Systems mit einem gasgefüllten Blasenspeicher zur Pufferung der Pressdruckspitzen abstützt, wobei mit dem hydro-pneumatischen System die Walzenpresskraft aufgebracht und die Verstellung der Walzenspaltweite vorgenommen wird, wobei das maximal nutzbare Gasvolumen des hydro-pneumatischen Systems veränderbar ausgebildet ist und wobei der Blasenspeicher des hydro-pneumatischen Systems auf seiner Gasseite mit einer in ihrem Gasvolumen veränderbaren Kolbenzylindereinheit in Verbindung steht.

Ausgehend von diesem Stand der Technik liegt der Erfindung die Aufgabe zugrunde, eine verbesserte Turbinenventilstellvorrichtung aufzuzeigen, mit der eine nachträgliche Anpassung an andere Dampfventile möglich ist. Diese Aufgabe wird durch eine Turbinenventilstellvorrichtung mit den Merkmalen von Anspruch 1 gelöst. Vorteilhafte Ausführungsformen und Weiterbildungen der Erfindung gehen aus den Unteransprüchen hervor.

Erfindungsgemäß ist vorgesehen, dass mittels einer Druckeinstelleinrichtung der Fluiddruck im zweiten Medienraum und mittels einer Vorspannungseinstelleinrichtung der Vorspanndruck auf einer Gasseite des Hydrospeichers eingestellt ist, und dass die Positioniereinrichtung, die Druckeinstelleinrichtung und die Vorspannungseinstelleinrichtung von einer zentralen oder dezentralen Steuerung für die jeweiligen Medienräume Positionssollwertvorgaben oder Positionsistwerte erhalten, so dass unterschiedliche Kraft-Hub-Kennlinien des Stellteils realisiert und während des Betriebs der Turbinenventilstellvorrichtung veränderbar sind.

Grundlage der erfindungsgemäßen Turbinenventilstellvorrichtung ist der Einsatz mindestens eines Hydrospeichers für die Ansteuerung derselben. Mit der erfindungsgemäßen Lösung kann die Typenvielfalt auf wenige Grundtypen reduziert werden. Die Turbinenventilstellvorrichtung kann daher an ein weites Spektrum von Ventileinheiten angeschlossen werden. Zur Kostenreduzierung trägt auch die vorteilhafte Verwendung von Kolbenspeichern als Standardkomponenten bei. Hydrospeicher zeichnen sich durch die Möglichkeit der Einstellbarkeit ihrer Kennlinien aus. Durch den Einsatz von externen, d.h. außerhalb der Medienräume angeordneten, Hydrospeichern wird die Verwendung von Gleichteilen ermöglicht und damit die Modularisierung und Anpassungsfähigkeit der Turbinenventilstellvorrichtung unterstützt. Ein weiterer Vorteil ist, dass der Stellteilantrieb für Installation und Wartung nahezu kraftfrei verfahren werden kann.

Vorteilhafterweise ist der Stellteilantrieb als Hydromotor oder hydraulischer Arbeitszylinder ausgeführt. In einer bevorzugten Ausführungsform bildet in dem hydraulischen Arbeitszylinder der erste Medienraum einen Stangenarbeitsraum und der zweite Medienraum einen Kolbenarbeitsraum innerhalb eines Zylindergehäuses, die mittels einer Kolbenstangeneinheit als Stellteil voneinander getrennt sind. Derartige Arbeitszylinder sind als Linearzylinder in vielfältigen Ausführungsformen auf dem Markt frei erhältlich. Im Sinne der Modularisierung können sie als Standardkomponenten eingesetzt werden. Dies trägt zu einer erheblichen Kostenersparnis bei der Fertigung bei. Vorteilhaft ist der Arbeitszylinder mit einer Endlagendämpfung in Ausfahrrichtung ausgestattet.

Zum Schließen der Ventileinheit in einem Fail-Safe-Betrieb fährt die Kolbenstangeneinheit aufgrund des Fluiddrucks des Hydrospeichers relativ zum Zylindergehäuse ein oder aus, wenn in dem ersten Medienraum der Fluiddruck abfällt. Damit ist der Fluiddruck im ersten Medienraum aufrecht zu erhalten, wenn die Ventileinheit geöffnet sein soll. Wenn der Fluiddruck aber aus irgendwelchen Gründen im ersten Medienraum abfällt, beispielsweise aufgrund eines Versagens in der Versorgungseinrichtung oder durch gezieltes Ablassen über ein Sicherheitsventil, führt dies ohne Weiteres zum Schließen der Ventileinheit und somit zum Unterbinden eines Medienstroms zu einem der Ventileinheit nachgeschalteten Verbraucher.

Des Weiteren ist die Druckeinstellvorrichtung vorgesehen. Mit dieser Druckeinstellvorrichtung kann der Fluiddruck im zweiten Medienraum zwischen einem Mindestdruck und einem Maximaldruck derart einstellbar sein, dass sich das Stellteil bei drucklosem erstem Medienraum in der zweiten Richtung bis in eine Endlage bewegt, wobei eine Überschreitung der zulässigen Antriebskräfte verhindert wird. Die Druckeinstelleinrichtung erhält mithin die Funktionsbereitschaft der Turbinenventilstellvorrichtung im laufenden Betrieb aufrecht. Der Druck, mit dem das Stellteil beaufschlagt ist, ist dabei vorteilhaft auf die nachgeschaltete Ventileinheit abgestimmt, damit diese sicher geschlossen wird, wenn es zu einem Druckabfall im ersten Medienraum kommt. Durch die Druckeinstellvorrichtung wird ferner ein Überlastschutz für die Ventileinheit bereitgestellt, da Überdrücke im zweiten Medienraum durch ein Ablassen des Fluids verhinderbar sind.

Weiterhin ist mit der Vorspannungseinstelleinrichtung der Vorspanndruck auf einer Gasseite des Hydrospeichers einstellbar. Durch die Einstellung des Vorspanndrucks lassen sich unterschiedliche Federkennlinien bzw. Druckniveaus für diese Federkennlinien einstellen.

Erfindungsgemäß erhalten eine Positioniereinrichtung, die Druckeinstelleinrichtung und die Vorspannungseinstelleinrichtung von der zentralen oder dezentralen Steuerung für die jeweiligen Medienräume Positionssollwertvorgaben oder Positionsistwerte, so dass unterschiedliche Kraft-Hub-Kennlinien des Stellteils realisierbar und vorzugsweise während des Betriebs der Turbinenventilstellvorrichtung veränderbar sind. Diese Vorgaben sind auch im laufenden Betrieb von einer Leitwarte aus möglich. Während mit den im Stand der Technik bekannten Sicherheitseinrichtungen lediglich degressive Kennlinien durch Tellerfedern erzeugbar waren, können mit der erfindungsgemäßen Turbinenventilstellvorrichtung nun progressive, lineare, konstante (isobare) oder sogar regressive Kraft-Hub-Kennlinien erzeugt werden. So ist beispielsweise bei isobarer Kennlinie der vom Hydrospeicher als Energiespeicher aufgebrachte Druck über den Verfahrweg des Stellteils als annähernd konstant einstellbar, wobei unterschiedliche Druckniveaus vorteilhaft wählbar sein können.

Vorzugsweise ist mittels einer, bevorzugt integrierten und/oder redundanten, Wegmesseinrichtung die Position des Stellteils erfassbar und damit der Solldruck im zweiten Medienraum bestimmbar. Die Wegmessung ermöglicht es hierbei auf besonders einfache Weise, eine Überwachung für die Turbinenventilstellvorrichtung zu realisieren. Weiterhin können Sensoren zur Druck- und/oder Temperaturmessung am zweiten Medienraum vorgesehen sein. Mithin wird während der Bewegung der Kolbenstangeneinheit die ständige Überwachung der Schließkraftverfügbarkeit durch Auswertung der Sensormessergebnisse ermöglicht, da mit Druck, Temperatur und abgeleitetem Volumen alle Zustandsgrößen des Hydrospeichers verfügbar sind.

Besonders vorteilhaft weist die Versorgungseinrichtung für den ersten Medienraum bei einem Stellantrieb eine druckgeregelte Axialkolbenpumpe mit Schwenkwinkeleinstellung oder bei einem Schaltantrieb eine Zahnradpumpe mit einem konstanten Fördervolumen auf. Die Versorgungseinrichtung wirkt mit der Positioniereinrichtung zusammen. Weist die Versorgungseinrichtung eine Axialkolbenpumpe auf, so ist in der Positioniereinrichtung ein Stetigventil vorgesehen. Wenn die Versorgungseinrichtung eine Zahnradpumpe umfasst, weist die Positioniereinrichtung ein Schaltventil auf. Um Energie zu sparen, kann die Zahnradpumpe nach Erreichen eines gewünschten Druckes abgeschaltet und erst bei Bedarf wieder eingeschaltet werden (Speicherladeschaltung).

Die Versorgungseinrichtung kann ferner einen weiteren Hydrospeicher als Teil einer Speicherladeschaltung aufweisen. Das im weiteren Hydrospeicher gespeicherte Volumen entspricht mindestens einem Reservehub des Stellteilantriebs. Dieser weitere Hydrospeicher ermöglicht einen besonders energiesparenden Betrieb der Versorgungseinrichtung, weil die Elektromotoren, welche die Pumpen antreiben, insbesondere bei Positionshaltung zeitweise abgeschaltet werden können.

Die Hydrospeicher sind vorzugsweise als Kolbenspeicher ausgeführt. Kolbenspeicher zeichnen sich durch eine hohe Gasdichtheit aus. Weiter bevorzugt werden Kolbenspeicher mit geschweißtem Deckel eingesetzt. Der Kolbenspeicher kann im laufenden Betrieb sehr einfach überwacht werden, da der Druck auf der Gasseite dem Druck auf der Fluidseite entspricht. Die Berechnung erfolgt auf der Basis der Gesetze für reale Gase. Zur Erfassung der Gaszustandsgrößen Druck (p), Volumen (V) und Temperatur (T) können die bereits erwähnte Wegmesseinrichtung zur Messung des Öldrucks über den Zylinderhub, also des Druckgradienten, und die weiteren Sensoren, die an den zweiten Medienraum angeschlossen sind, eingesetzt werden.

Mit besonderem Vorteil können mehrere Hydrospeicher parallel geschaltet werden, um zum einen durch Redundanz die Ausfallsicherheit und zum anderen die Kapazität zu erhöhen.

An den ersten Medienraum kann eine Fluidablassleitung angeschlossen sein, welche durch eine Sicherheitssteuerung mit einem Sicherheitsventil aktiv sperrbar ist und eine Ableitung des Fluids in Richtung des Tanks ermöglicht. Damit ist der Fluiddruck im ersten Medienraum durch eine Sicherheitssteuerung, vorzugsweise mit einer austauschbaren Steuerventilanordnung und einem Sicherheitsventil, kontrolliert entlastbar. In der Sperrstellung wird der Abfluss von Fluid aus dem ersten Medienraum durch die Fluidablassleitung unterbunden, so dass ein Druckaufbau im ersten Medienraum überhaupt erst ermöglicht wird. Die Entlastung des ersten Medienraumes erfolgt nach dem Ruhestromprinzip. Die Sicherheitssteuerung kann durch eine Steuerventilanordnung in n-von-m-Logik auslösbar sein, vorzugsweise durch eine Steuerventilanordnung in einer 1-von-2-Logik oder in einer 2-von-3-Logik. Bei einer 1-von-2-Logik muss mindestens eine Logikeinheit von zweien stromlos geschaltet werden, um das Sicherheitsventil zu öffnen. Bei einer 2-von-3-Logik müssen zumindest zwei Logikeinheiten stromlos geschaltet werden, um das Sicherheitsventil zu öffnen. Die Sicherheitsventilanordnung ist vorteilhaft austauschbar, um die Turbinenventilstellvorrichtung wahlweise mit einer Steuerventilanordnung der 1-von-2-Logik oder der 2-von-3-Logik ausstatten und diese auch nachträglich noch gegeneinander austauschen zu können. Die Sicherheitsventilanordnung ermöglicht zweckmäßigerweise einen Teilhubtest. Eine Ausführungsform der 2-von-3-Logik mit Teilhubtest ist in der bereits erwähnten DE 10 2004 042 891 B3 beschrieben.

Weiterhin können, vorzugsweise berührungslose, Endschalter zur Überwachung der Kolbenstangeneinheit im Zylindergehäuse eingesetzt werden.

Die Erfindung ist nachfolgend anhand von in den Figuren gezeigten Ausführungsbeispielen näher erläutert. Es zeigen:
- Fig. 1 bis 3: Schaltpläne für drei erfindungsgemäße Ausführungsformen der Turbinenventilstellvorrichtung;
- Fig. 4 und 5: zwei perspektivische Ansichten einer Turbinenventilstellvorrichtung gemäß der dritten Ausführungsform der Erfindung, die zueinander um 180° gedreht sind;
- Fig. 6: ein Blockschaltbild der Steuerung einer erfindungsgemäßen Turbinenventilstellvorrichtung; und
- Fig. 7: eine Gegenüberstellung möglicher erzeugbarer Kraft-Hub-Kennlinien des Stellteils.

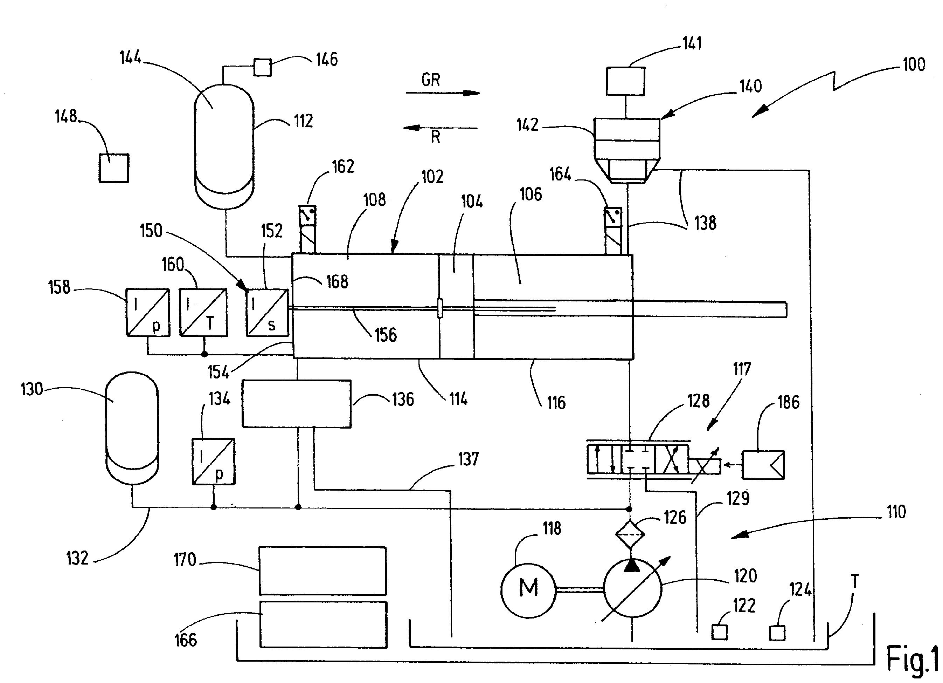

In den Fig. 1 bis 3 sind drei Ausführungsformen von erfindungsgemäßen Turbinenventilstellvorrichtungen 100, 200, 300 zum Ansteuern mindestens einer nicht näher dargestellten Ventileinheit eines medienbetriebenen Verbrauchers, wie einer Dampf- oder Gasturbine, mit einem Stellteilantrieb 102, 202, 302 gezeigt, der ein bewegbares Stellteil 104, 204, 304, einen ersten Medienraum 106, 206, 306 und einen zweiten Medienraum 108, 208, 308 aufweist. Ein Druckaufbau im ersten Medienraum 106, 206, 306 sucht die Bewegung des Stellteils 104, 204, 304 in einer ersten Richtung R und ein Druckaufbau im zweiten Medienraum 108, 208, 308 sucht die Bewegung des Stellteils 104, 204, 304 in einer entgegengesetzten zweiten Richtung GR zu bewirken. Der erste Medienraum 106, 206, 306 ist mittels einer Versorgungseinrichtung 110, 210, 310 mit einem Fluid in vorgebbaren Mengen versorgbar. Der zweite Medienraum 108, 208, 308 ist durch einen Energiespeicher 112, 212, 312 beaufschlagt. Der Energiespeicher ist erfindungsgemäß ein mit einem Vorspanndruck versehener Hydrospeicher 112, 212, 312, der an den zweiten Medienraum 108, 208, 308 permanent angeschlossen ist.

Der Stellteilantrieb 102, 202, 302 ist durch einen hydraulischen Arbeitszylinder 114, 214, 314 gebildet. In dem hydraulischen Arbeitszylinder 114, 214, 314 bildet der erste Medienraum 106, 206, 306 einen Stangenarbeitsraum und der zweite Medienraum 108, 208, 308 einen Kolbenarbeitsraum innerhalb eines Zylindergehäuses 116, 216, 316, die mittels einer Kolbenstangeneinheit als Stellteil 104, 204, 304 voneinander getrennt sind. Der hydraulische Arbeitszylinder 114, 214, 314 ist so aufgebaut, dass ein Ausfahren der Kolbenstangeneinheit 104, 204, 304 ein Schließen einer nachgeschalteten Ventileinheit bewirkt, so dass ein Dampfmassenstrom zu einem medienbetriebenen Verbraucher unterbrochen wird. Zum Schließen der Ventileinheit in einem Fail-Safe-Betrieb fährt deshalb die Kolbenstangeneinheit 104, 204, 304 aufgrund des Vorspanndrucks des Hydrospeichers 112, 212, 312 relativ zum Zylindergehäuse 116, 216, 316 aus, wenn in dem ersten Medienraum 106, 206, 306 der Fluiddruck abfällt.

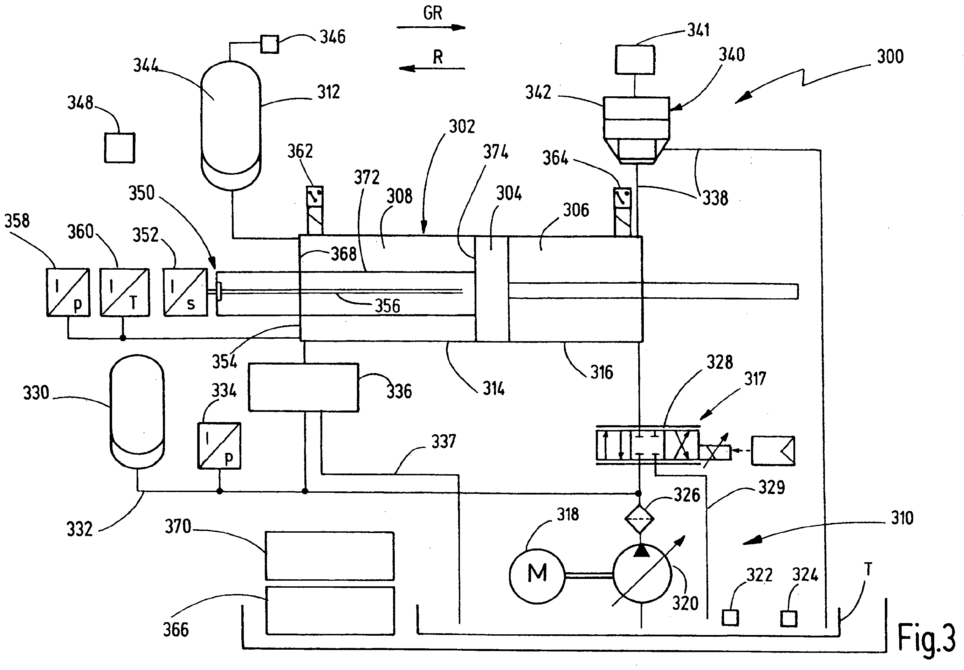

Der erste Medienraum 106, 206, 306 ist mit der Versorgungseinheit 110, 210, 310 versorgbar, die mit einer Positioniereinrichtung 117, 217, 317 zusammenwirkt. Mit einem Elektromotor 118, 218, 318 ist gemäß Fig. 1 und 3 eine Axialkolbenpumpe 120, 320 mit Schwenkwinkeleinstellung antreibbar. Die Axialkolbenpumpe 120, 320 saugt Fluid aus einem Tank T an. Zur Sicherheit weist der Tank T einen Temperatursensor 122, 222, 322 und einen Füllstandssensor 124, 224, 324 auf. Das Fluid wird durch einen Filter 126, 226, 326 auf dem Weg zu einem Stetigventil 128, 328 gedrückt. Mit dem Stetigventil 128, 328 der Positioniereinrichtung 117, 217, 317, das als 4/3-Wegeventil konzipiert, aber als 3/3 Wegeventil betrieben ist, kann der erste Medienraum 106, 206, 306 mit Fluid versorgt werden. Der Druck im ersten Medienraum 106, 206, 306 kann aber auch gehalten werden. In der gekreuzten Stellung ermöglicht das Stetigventil 128, 328 eine Entlastung des ersten Medienraums 106, 206, 306 in Richtung des Tanks T über eine Fluidleitung 129, 229, 329. Zwischen den Filter 126, 226, 326 und das Stetigventil 128, 328 ist ein weiterer Hydrospeicher 130, 230, 330 als Zwischenspeicher geschaltet. Der Fluiddruck in der Leitung 132, 232, 332, die zum weiteren Hydrospeicher 130, 230, 330 hinführt, ist mit einem Drucksensor 134, 234, 334 überwachbar.

An diese Leitung 132, 232, 332 ist zudem eine Druckeinstelleinrichtung 136, 236, 336 angeschlossen, mit welcher es möglich ist, den Fluiddruck im zweiten Medienraum 108, 208, 308 einzustellen. Die Druckeinstelleinrichtung 136, 236, 336 weist eine Fluidleitung 137, 237, 337 zum Tank T zur Entlastung des zweiten Medienraums 108, 208, 308 auf. Mit der Druckeinstelleinrichtung 136, 236, 336 ist der Fluiddruck im zweiten Medienraum 108, 208, 308 auf einen Mindestdruck derart einstellbar, dass sich das Stellteil 104, 204, 304 bei drucklosem ersten Medienraum 106, 206, 306 in der zweiten Richtung GR bis in eine Endlage bewegt. Dieser Mindestdruck entspricht mindestens der Mindeststellkraft des Stellteilantriebs 102, 202, 302 bei ausgefahrenem Stellteil 104, 204, 304. Beim Einfahren des Stellteils 104, 204, 304 erhöht sich der Druck im zweiten Medienraum 108, 208, 308 des Arbeitszylinders 114, 214, 314. Der Maximaldruck im zweiten Medienraum 108, 208, 308 wird jedoch von der Druckeinstelleinrichtung 136, 236, 336 begrenzt.

Weiterhin ist eine Fluidablassleitung 138, 238, 338 vom ersten Medienraum 106, 206, 306 in Richtung des Tanks T vorgesehen. Diese Fluidablassleitung 138, 238, 338 ist durch eine Sicherheitssteuerung 140, 240, 340 mit einer Steuerventilanordnung in n-von-m-Logik 141, 241, 341 und einem Sicherheitsventil 142, 242, 342 aktiv sperrbar. Durch die Sicherheitssteuerung 140, 240, 340 ist sichergestellt, dass die nachgeschaltete Ventileinheit nur dann geöffnet ist, wenn das Sicherheitsventil 142, 242, 342 aktiv gesperrt ist, da nur dann ein Druckaufbau im ersten Medienraum 106, 206, 306 erfolgen kann.

Der Vorspanndruck auf einer Gasseite 144, 244, 344 des einen Hydrospeichers 112, 212, 312 wird durch eine Vorspannungseinstelleinrichtung 146, 246, 346 eingestellt.

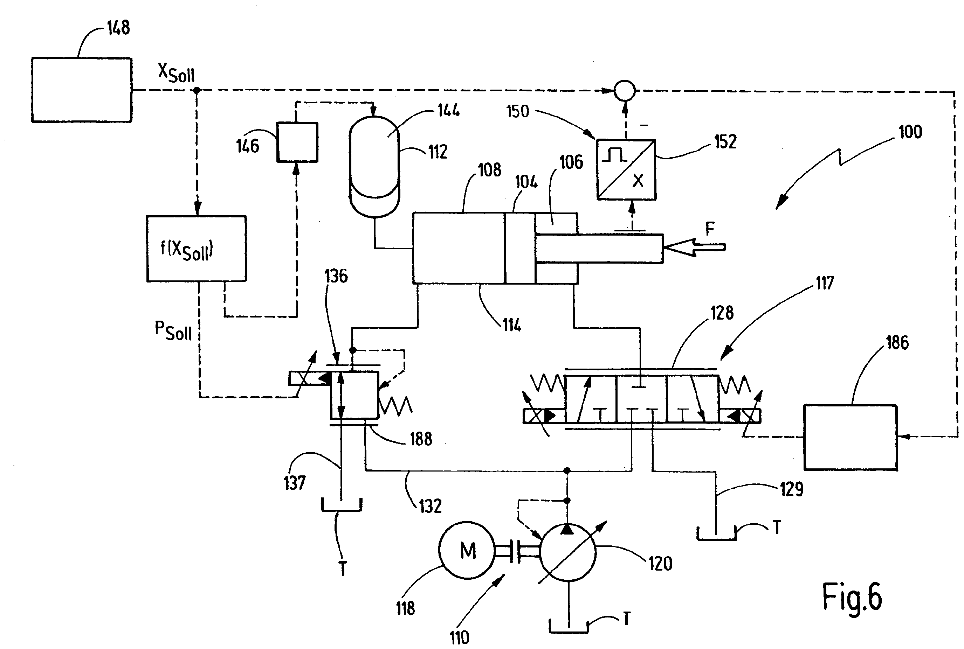

Die Positioniereinrichtung 127, 227, 327, die Druckeinstelleinrichtung 136, 236, 336 und gegebenenfalls die Vorspannungseinstelleinrichtung 146, 246, 346 erhalten von einer (zentralen oder dezentralen) Steuerung 148, 248, 348 für die jeweiligen Medienräume 106, 108; 206, 208; 306, 308 Positionssollwertvorgaben x_{Soll} (Fig. 6) oder Positionsistwerte x_{Ist}, so dass unterschiedliche Kraft-Hub-Kennlinien des Stellteils 104, 204, 304 realisierbar sind, die nachfolgend noch näher beschrieben werden.

Zur Überwachung der Turbinenventilstellvorrichtung 100, 200, 300 sind diverse Sensoren vorgesehen. Die Position der Kolbenstangeneinheit 104, 204, 304 ist mit einer Wegmesseinrichtung 150, 250, 350 erfassbar. Die Wegmesseinrichtung 150, 250, 350 weist einen Sensor 152, 252, 352 auf einer Rückseite 154, 254, 354 des Arbeitszylinders 114, 214, 314 auf, welcher über einen mit der Kolbenstangeneinheit 104, 204, 304 gekoppelten Stab 156, 256, 356 die Position der Kolbenstangeneinheit 104, 204, 304 erfasst. Daneben ist an den zweiten Medienraum 108, 208, 308 ein Drucksensor 158, 258, 358 und ein Temperatursensor 160, 260, 360 angeschlossen. Weiterhin sind berührungslose Endschalter 162, 164; 262, 264; 362, 364 für die Überwachung der Position der Kolbenstangeneinheit 104, 204, 304 im Arbeitszylinder 114, 214, 314 vorgesehen. Alle Sensoren sind mit der zentralen oder dezentralen Steuerung 148, 248, 348 gekoppelt.

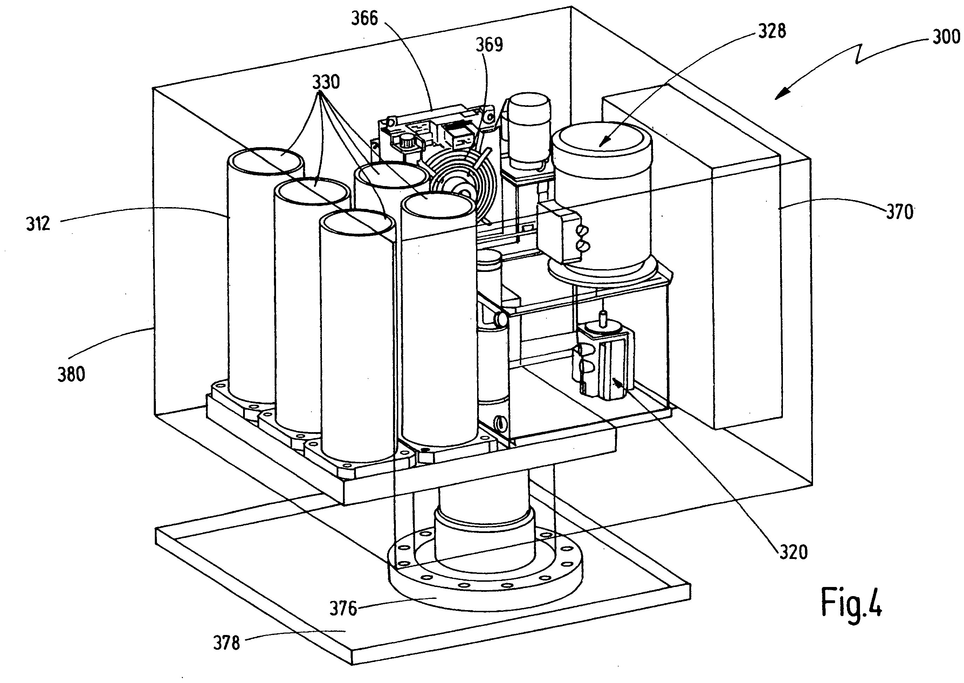

Zur Kühlung der Turbinenventilstellvorrichtung 100, 200, 300 und des umlaufenden Fluids ist ein Kühlaggregat 166, 266, 366 vorgesehen. Der Arbeitszylinder 114, 214, 314 und das Fluid werden durch einen autarken, in sich geschlossenen Kühlkreislauf temperiert. Als Betriebsmedium wird Wasserglykol verwendet. Der Zylinderboden 168, 268, 368 des Arbeitszylinders 114, 214, 314 ist mit Kühlkanälen versehen. Der Tank T weist Kühlschlangen auf. Auf diese Weise wird der externe Wärmeeintrag aus der Ventileinheit in das Fluid an der Eintrittsstelle reduziert. Der Wärmeaustausch mit der Umgebungsluft erfolgt mittels eines Kühlluftgebläses 369 (Fig. 4).

Die Koppelung der elektrischen Komponenten erfolgt über ein Klemmenbrett 170, 270, 370.

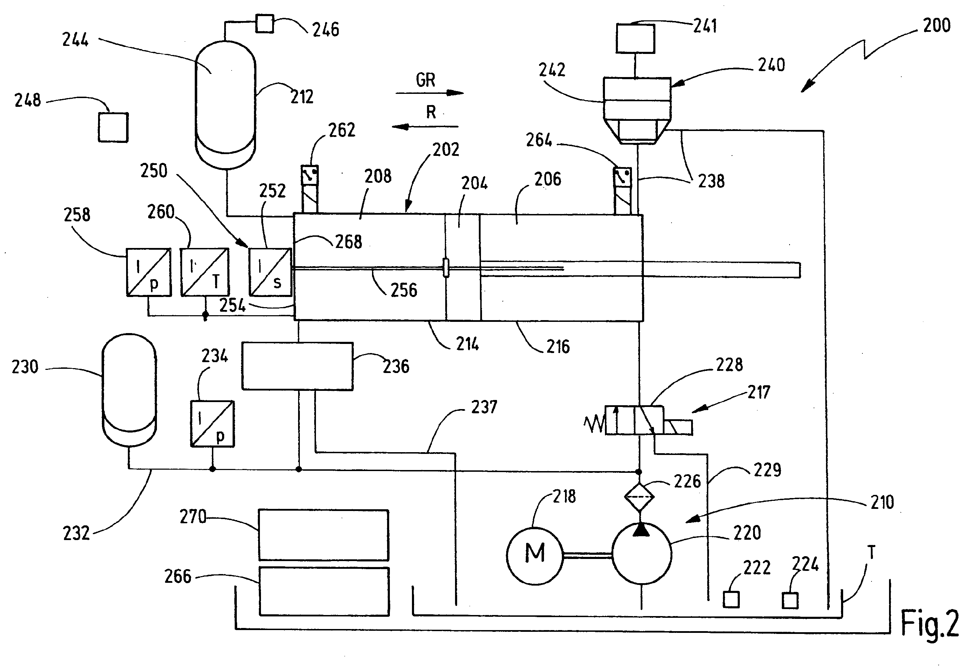

Die Ausführungsform der Fig. 2 unterscheidet sich von der Ausführungsform der Fig. 1 lediglich darin, dass die Versorgungseinrichtung 210 eine Zahnradpumpe 220 mit einem konstanten Fördervolumen anstelle einer Axialkolbenpumpe 120 aufweist. Eine Positioniereinrichtung 217 umfasst ein Wegeschaltventil 228, anstelle eines Stetigventils 128.

In der Fig. 3 ist eine Ausführungsform der Turbinenventilstellvorrichtung 300 insbesondere für Umleitventile gezeigt. Diese Ausführungsform basiert auf der Ausführungsform der Fig. 1 und weist einen Arbeitszylinder 314 auf, bei dem die Kolbenstangeneinheit 304 im zweiten Medienraum 308 einen Fortsatz 372 aufweist, der sich durch einen Zylinderboden 368 des Arbeitszylinders 314 hindurch erstreckt. Auf diese Weise ist die mit Fluid beaufschlagbare Oberfläche 374 der Kolbenstangeneinheit 304 im zweiten Medienraum 308 verkleinert.

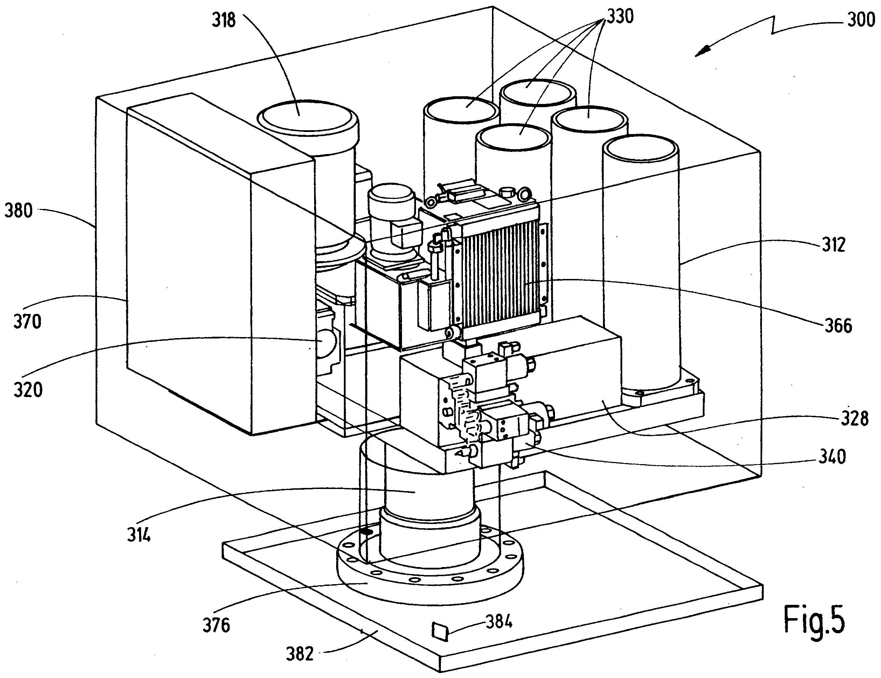

Die Fig. 4 und 5 zeigen den Aufbau der Turbinenventilstellvorrichtung 300 in perspektivischen Ansichten, die zueinander um 180° gedreht sind. Der Arbeitszylinder 314 ist dabei mittels einer Flanschplatte 376 an einer Ventileinheit befestigt. Die Komponenten des Stellteilantriebs sind kompakt innerhalb enger Bauraumgrenzen 380 angeordnet, wobei der Hydrospeicher 312 und der weitere Hydrospeicher 330 als redundante Kolbenspeicher mit geschweißtem Deckel ausgeführt sind. Daneben kann man den Elektromotor 318 zum Antrieb der Axialkolbenpumpe 320 sehen. Seitlich ist ein Kühlaggregat 366 mit dem Kühlluftgebläse 369 angeordnet. Unterhalb des Kühlaggregats 366 befindet sich die Sicherheitssteuerung 340. Am Steuerblock neben der Sicherheitssteuerung 340 ist das Stetigventil 328 angeordnet. Unterhalb der Turbinenventilstellvorrichtung 300 ist eine Fluidauffangwanne 382 für das Fluid mit einem Überwachungskontakt 384 angeordnet.

In Fig. 6 ist ein exemplarisches Blockschaltbild der Ansteuerung der Komponenten der Turbinenventilstellvorrichtung 100 gezeigt. Von der zentralen oder dezentralen Steuerung 148 wird ein Positionssollwert x_{Soll} vorgegeben, der mit einem Positionssensor 152 der Wegmesseinrichtung 150 für die Kolbenstangeneinheit 104 des Arbeitszylinders 114 abgeglichen wird. Mit dem Ergebnis dieses Abgleichs wird ein Positionsregler 186 des Stetigventils 128 der Positioniereinrichtung 117 angesteuert. Durch das Stetigventil 128 wird der erste Medienraum 106 des Arbeitszylinders 114 entweder mit einer Axialkolbenpumpe 120 verbunden oder eine Ableitung von Fluid in Richtung eines Tanks T über die Fluidleitung 129 ermöglicht oder es wird der bestehende Druck im ersten Medienraum 106 konstant gehalten. Ferner kann der Positionssollwert x_{Soll} oder der Positionsistwert x_{Ist} in eine Drucksollwertvorgabe p_{Soll} übersetzt werden, die dann zur Steuerung eines Proportionaldruckventils 188 der Druckeinstelleinrichtung 136 dient, durch welche der Fluiddruck im zweiten Medienraum 108 einstellbar ist. Die Druckeinstelleinrichtung 136 ist ebenfalls mit der Axialkolbenpumpe 120 bzw. dem Tank T verbunden und ermöglicht es, den Druck im zweiten Medienraum 108 gezielt zu erhöhen oder zu reduzieren. Weiterhin ist die Vorspannungseinstelleinrichtung 146 vorgesehen, die ebenfalls mit einer Druckvorgabe p_{Soll} versorgt werden kann und den Vorspanndruck auf der Gasseite 144 des Hydrospeichers 112 einstellt.

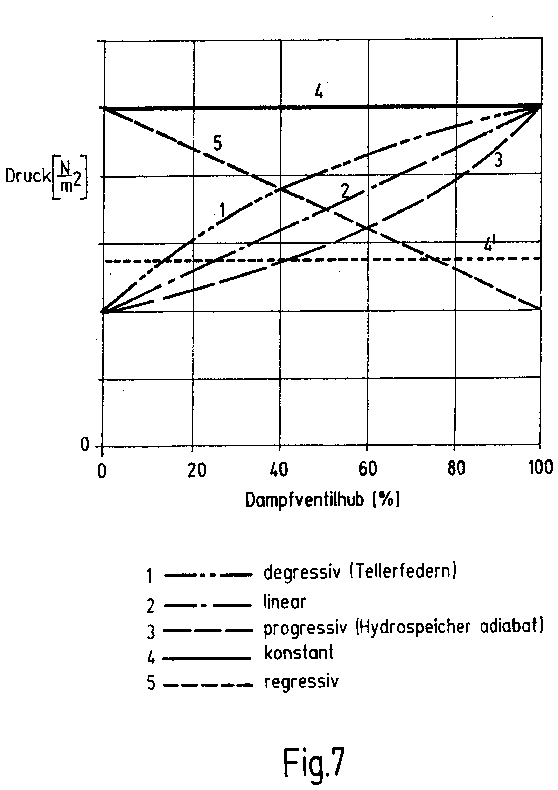

In Fig. 7 ist gezeigt, dass sich durch den kombinierten Einsatz von Positioniereinrichtung 117, 217, 317, Druckeinstelleinrichtung 136, 236, 336 und Vorspannungseinstelleinrichtung 146, 246, 346 verschiedene Kraft-Hub-Kennlinien 1-5 des Stellteils realisieren lassen. Analog zu Tellerfedern kann die Turbinenventilstellvorrichtung 100, 200, 300 so eingestellt werden, dass sie eine degressive Kennlinie 1 aufweist. Weiterhin gibt es die Möglichkeit, eine lineare Kennlinie 2, eine progressive Kennlinie 3, konstante (isobare) Kennlinien auf unterschiedlichen Niveaus 4, 4' oder eine regressive Kennlinie 5 einzustellen. Damit kann die Turbinenventilstellvorrichtung optimal an die erforderlichen Kraftprofile, wie sie zum Beispiel in unterschiedlichen Betriebszuständen eingestellt werden müssen, angepasst werden. Auch eine adaptive Kraftbegrenzung ist somit realisierbar. Da die Charakteristik einfach durch eine Sollwertvorgabe veränderbar ist, kann eine Einstellung während des laufenden Betriebs von einer Leitwarte aus vorgenommen werden.

Die erfindungsgemäßen Turbinenventilstellvorrichtungen 100, 200, 300 weisen diverse Vorteile auf, insbesondere eine hohe Modularität und Anpassungsfähigkeit durch die externe hydropneumatische Feder in Form des Hydrospeichers 112, 212, 312. Durch die modulare Bauweise können weiterhin Komponenten und komplette Subsysteme, wie zum Beispiel die Versorgungseinrichtung 110, 210, 310 oder das Kühlaggregat 166, 266, 366 ausgetauscht oder nachträglich geändert werden. Es gibt eine geringe Antriebsvariantenvielfalt und es können viele Gleichteile eingesetzt werden. Die Verfügbarkeit kann durch Redundanz, zum Beispiel der Hydrospeicher 112, 130; 212, 230; 312, 330 erhöht werden. Die Turbinenventilstellvorrichtungen 100, 200, 300 zeichnen sich weiterhin dadurch aus, dass sie eine hohe Flexibilität durch eine Kraftniveauanpassung aufweisen, die auch im Betrieb von einer Leitwarte aus einstellbar ist. Auf diese Weise können verschiedene Kraft-Hub-Kennlinien im laufenden Betrieb eingestellt werden. Bei den zum Einsatz kommenden Kolbenspeichertypen handelt es sich um ausgereifte Serienkomponenten mit einer Auslegung auf Dauerfestigkeit. Die hohe Betriebssicherheit der Hydrospeicher 112, 130; 212, 230; 312, 330 wird durch einen gasseitig angeschweißten Deckel und ein reibungsarmes Dichtungssystem erreicht. Die hydropneumatische Feder und der redundante Einsatz von Kolbenspeichern gewährleistet eine hohe Zuverlässigkeit der Turbinenventilstellvorrichtung bei geringen Kosten bei der Herstellung und im laufenden Betrieb.

Insgesamt weisen die erfindungsgemäßen Turbinenventilstellvorrichtungen 100, 200, 300 damit wesentliche Vorteile gegenüber den aus dem Stand der Technik bekannten Turbinenventilstellvorrichtungen mechanischen Federn auf.

## Patentansprüche

1. Turbinenventilstellvorrichtung zum Ansteuern mindestens einer Ventileinheit eines medienbetriebenen Verbrauchers, wie einer Dampf- oder Gasturbine, mit einem Stellteilantrieb (102, 202, 302), der ein bewegbares Stellteil (104, 204, 304), mindestens einen ersten Medienraum (106, 206, 306) und mindestens einen zweiten Medienraum (108, 208, 308) aufweist, wobei ein Druckaufbau im ersten Medienraum (106, 206, 306) eine Bewegung des Stellteils (104, 204, 304) in einer ersten Richtung (R) und ein Druckaufbau im zweiten Medienraum (108, 208, 308) eine Bewegung des Stellteils (104, 204, 304) in einer entgegengesetzten zweiten Richtung (GR) zu bewirken sucht, wobei der erste Medienraum (106, 206, 306) mittels einer Versorgungseinrichtung (110, 210, 310) mit einem Fluid in vorgebbaren Mengen versorgbar ist, die mit einer Positioniereinrichtung (117, 217, 317) zusammenwirkt und wobei der zweite Medienraum (108, 208, 308) durch einen Energiespeicher (112, 212, 312) beaufschlagt ist, wobei der Energiespeicher mindestens ein mit einem Vorspanndruck versehener Hydrospeicher (112, 212, 312) ist, der an den zweiten Medienraum (108, 208, 308) permanent angeschlossen ist, **dadurch gekennzeichnet, dass** mittels einer Druckeinstelleinrichtung (136, 236, 336) der Fluiddruck im zweiten Medienraum (108, 208, 308) und mittels einer Vorspannungseinstelleinrichtung (146, 246, 346) der Vorspanndruck auf einer Gasseite (144, 244, 344) des Hydrospeichers (112, 212, 312) eingestellt ist, und dass die Positioniereinrichtung (117, 217, 317), die Druckeinstelleinrichtung (136, 236, 336) und die Vorspannungseinstelleinrichtung (146, 246, 346) von einer zentralen oder dezentralen Steuerung (148, 248, 348) für die jeweiligen Medienräume (106, 108; 206, 208; 306, 308) Positionssollwertvorgaben (x_{Soll}) oder Positionsistwerte (x_{Ist}) erhalten, so dass unterschiedliche Kraft-Hub-Kennlinien (1-5) des Stellteils (104, 204, 304) realisiert und während des Betriebs der Turbinenventilstellvorrichtung veränderbar sind.

2. Turbinenventilstellvorrichtung nach Anspruch 1, **dadurch gekennzeichnet, dass** der Stellteilantrieb (102, 202, 302) durch einen Hydromotor oder einen hydraulischen Arbeitszylinder (114, 214, 314) gebildet ist.

3. Turbinenventilstellvorrichtung nach Anspruch 2, **dadurch gekennzeichnet, dass** in dem hydraulischen Arbeitszylinder (114, 214, 314) der erste Medienraum (106, 206, 306) einen Stangenarbeitsraum und der zweite Medienraum (108, 208, 308) einen Kolbenarbeitsraum innerhalb eines Zylindergehäuses (116, 216, 316) bildet, die mittels einer Kolbenstangeneinheit als Stellteil (104, 204, 304) voneinander getrennt sind.

4. Turbinenventilstellvorrichtung nach Anspruch 3, **dadurch gekennzeichnet, dass** zum Schließen der Ventileinheit in einem Fail-Safe-Betrieb die Kolbenstangeneinheit (104, 204, 304) aufgrund des Fluiddrucks des Hydrospeichers (112, 212, 312) relativ zum Zylindergehäuse (116, 216, 316) ein- oder ausfährt, wenn in dem ersten Medienraum (106, 206, 306) der Fluiddruck abfällt.

5. Turbinenventilstellvorrichtung nach einem der vorhergehenden Ansprüche, **dadurch gekennzeichnet, dass** mit der Druckeinstelleinrichtung (136, 236, 336) der Fluiddruck im zweiten Medienraum (108, 208, 308) zwischen einem Mindestdruck und einem Maximaldruck derart einstellbar ist, dass sich das Stellteil (104, 204, 304) bei drucklosem ersten Medienraum (106, 206, 306) in der zweiten Richtung (GR) bis in eine Endlage bewegt, wobei eine Überschreitung der zulässigen Antriebskräfte verhindert wird.

6. Turbinenventilstellvorrichtung nach Anspruch 1, **dadurch gekennzeichnet, dass** der vom Hydrospeicher (112, 212, 312) als Energiespeicher aufgebrachte Druck über den Verfahrweg des Stellteils (104, 204, 304) auf annähernd konstanten isobaren Kennlinien (4, 4') einstellbar ist.

7. Turbinenventilstellvorrichtung nach einem der vorhergehenden Ansprüche, **dadurch gekennzeichnet, dass** mittels einer Wegmesseinrichtung (150, 250, 350) die Position des Stellteils (104, 204, 304) erfassbar und damit der Solldruck im zweiten Medienraum (108, 208, 308) bestimmbar ist.

8. Turbinenventilstellvorrichtung nach einem der vorhergehenden Ansprüche, **dadurch gekennzeichnet, dass** die Versorgungseinrichtung (110, 210, 310) für den ersten Medienraum (106, 206, 306) eine Axialkolbenpumpe (120, 320) mit Schwenkwinkeleinstellung oder eine Zahnradpumpe (220) mit einem konstanten Fördervolumen in einer Speicherladeschaltung umfasst und die Positioniereinrichtung (117, 217, 317) ein Stetigventil (128, 328) oder ein Schaltventil (228) aufweist.

9. Turbinenventilstellvorrichtung nach einem der vorhergehenden Ansprüche, **dadurch gekennzeichnet, dass** ein Fluiddruck im ersten Medienraum (106, 206, 306) durch eine Sicherheitssteuerung (140, 240, 340), vorzugsweise mit einer austauschbaren Steuerventilanordnung (141, 241, 341) und einem Sicherheitsventil (142, 242, 342), kontrolliert entspannbar ist.

10. Turbinenventilstellvorrichtung nach Anspruch 9, **dadurch gekennzeichnet, dass** die Steuerventilanordnung (141, 241, 341) in einer n-von-m-Logik, vorzugsweise in einer 1-von-2-Logik oder in einer 2-von-3-Logik, ausgeführt ist und weiter bevorzugt einen Teilhubtest ermöglicht.

## Claims

1. Turbine valve actuating device for controlling at least one valve unit of a media-operated consumer, such as a steam or gas turbine, with an actuator drive (102, 202, 302) which has a movable actuator (104, 204, 304), at least one first media chamber (106, 206, 306) and at least one second media chamber (108, 208, 308), wherein a build-up of pressure in the first media chamber (106, 206, 306) seeks to bring about a movement of the actuator (104, 204, 304) in a first direction (R) and a build-up of pressure in the second media chamber (108, 208, 308) seeks to bring about a movement of the actuator (104, 204, 304) in an opposing second direction (GR), wherein the first media chamber (106, 206, 306) can be supplied with a fluid in predefinable quantities by means of a supply device (110, 210, 310) which cooperates with a positioning device (117, 217, 317) and wherein the second media chamber (108, 208, 308) is acted upon by an energy accumulator (112, 212, 312), wherein the energy accumulator is at least a hydraulic accumulator (112, 212, 312) provided with a preload pressure, said hydraulic accumulator being permanently connected to the second media chamber (108, 208, 308), **characterised in that** the fluid pressure in the second media chamber (108, 208, 308) is set by means of a pressure setting device (136, 236, 336) and the preload pressure on a gas side (144, 244, 344) of the hydraulic accumulator (112, 212, 312) is set by means of a preload setting device (146, 246, 346), and **in that** the positioning device (117, 217, 317), the pressure setting device (136, 236, 336) and the preload setting device (146, 246, 346) receive position setpoints (xSet) or actual position values (xActual) for the respective media chambers (106, 108; 206, 208; 306, 308) from a centralised or decentralised controller (148, 248, 348), such that different force-stroke characteristics (1-5) of the actuator (104, 204, 304) are realised and are modifiable during operation of the turbine valve actuating device.

2. Turbine valve actuating device according to claim 1, **characterised in that** the actuator drive (102, 202, 302) is formed by a hydraulic motor or a hydraulic working cylinder (114, 214, 314).

3. Turbine valve actuating device according to claim 2, **characterised in that**, in the hydraulic working cylinder (114, 214, 314), the first media chamber (106, 206, 306) forms a rod working chamber and the second media chamber (108, 208, 308) forms a piston working chamber within a cylinder housing (116, 216, 316), which chambers are separated from each other by means of a piston rod unit as the actuator (104, 204, 304).

4. Turbine valve actuating device according to claim 3, **characterised in that**, for closing the valve unit in fail-safe operation, the piston rod unit (104, 204, 304) retracts or extends with respect to the cylinder housing (116, 216, 316) due to the fluid pressure of the hydraulic accumulator (112, 212, 312) when the fluid pressure in the first media chamber (106, 206, 306) decreases.

5. Turbine valve actuating device according to one of the preceding claims, **characterised in that** the fluid pressure in the second media chamber (108, 208, 308) can be set between a minimum pressure and a maximum pressure by means of the pressure setting device (136, 236, 336) in such a manner that, in the second direction (GR), the actuator (104, 204, 304) moves to an end position when the first media chamber (106, 206, 306) is depressurised, thus preventing the permissible drive forces from being exceeded.

6. Turbine valve actuating device according to claim 1, **characterised in that** the pressure applied by the hydraulic accumulator (112, 212, 312) as the energy accumulator can be set via the travel path of the actuator (104, 204, 304) to approximately constant isobaric characteristic curves (4, 4').

7. Turbine valve actuating device according to one of the preceding claims, **characterised in that** the position of the actuator (104, 204, 304) can be detected by means of a displacement measuring device (150, 250, 350) and the set pressure in the second media chamber (108, 208, 308) can therefore be determined.

8. Turbine valve actuating device according to one of the preceding claims, **characterised in that** the supply device (110, 210, 310) for the first media chamber (106, 206, 306) comprises an axial-piston pump (120, 320) with pivot angle adjustment or a gear pump (220) with a constant delivery volume in an accumulator charging circuit and the positioning device (117, 217, 317) has a continuously adjustable valve (128, 328) or a switching valve (228).

9. Turbine valve actuating device according to one of the preceding claims, **characterised in that** a fluid pressure in the first media chamber (106, 206, 306) can be released in a controlled manner by a safety controller (140, 240, 340), preferably with a replaceable control valve arrangement (141, 241, 341) and a safety valve (142, 242, 342).

10. Turbine valve actuating device according to claim 9, **characterised in that** the control valve arrangement (141, 241, 341) is designed in an n-out-of-m logic, preferably in a 1-out-of-2 logic or in a 2-out-of-3 logic, and further preferably enables a partial stroke test.

## Revendications

1. Installation de commande de vanne de turbine pour commander au moins une unité de vanne d'un consommateur à fonctionnement par fluide, comme une turbine à vapeur ou une turbine à gaz, comprenant un entraînement (102, 202, 302) d'une partie de commande, qui a une partie (104, 204, 304) de commande mobile, au moins un premier espace (106, 206, 306) à fluide et au moins un deuxième espace (108, 208, 308) à fluide, un établissement de la pression dans le premier espace (106, 206, 306) à fluide cherchant à provoquer un déplacement de la partie (104, 204, 304) de commande dans un premier sens (R) et un établissement de la pression dans le deuxième espace (108, 208, 308) à fluide, un déplacement de la partie (104, 204, 304) de commande dans un deuxième sens (GR) contraire, le premier espace (106, 206, 306) à fluide pouvant être alimenté en un fluide en des quantités pouvant être prescrites, au moyen d'un dispositif (110, 210, 310) d'alimentation, qui coopère avec un dispositif (117, 217, 317) de mise en position, et le deuxième espace (108, 208, 308) à fluide étant soumis à l'action d'un accumulateur (112, 212, 312) d'énergie,
dans lequel l'accumulateur d'énergie est au moins un accumulateur (112, 212, 312) hydraulique, qui est pourvu d'une pression de précontrainte et qui est raccordé en permanence au deuxième espace (108, 208, 308) à fluide, **caractérisée en ce qu'**au moyen d'un dispositif (136, 236, 336) de réglage de la pression, la pression du fluide dans le deuxième espace (108, 208, 308) à fluide, et au moyen d'un dispositif (146, 246, 346) de réglage de la précontrainte, la pression de précontrainte sur un côté (144, 244, 344) de gaz de l'accumulateur (112, 212, 312) hydraulique sont réglées et **en ce que** le dispositif (117, 217, 317) de mise en position, le dispositif (136, 236, 336) de réglage de la pression et le dispositif (146, 246, 346) de réglage de la précontrainte reçoivent, d'une commande (148, 248, 348) centralisée ou décentralisée pour les espaces (106, 108 ; 206, 208 ; 306, 308) à fluide respectifs, des prescriptions de valeur (xₛₒₗₗ) de consigne de position ou des valeurs (xᵢₛₜ) réelles de position, de manière à réaliser des caractéristiques (1 à 5) force-courbe différentes de la partie (104, 204, 304) de commande et à pouvoir les modifier pendant le fonctionnement de l'installation de commande de vanne de turbine.

2. Installation de commande de vanne de turbine suivant la revendication 1, **caractérisée en ce que** l'entraînement (102, 202, 302) de la partie de commande est formé par un moteur hydraulique ou par un vérin (114, 214, 314) de travail hydraulique.

3. Installation de commande de vanne de turbine suivant la revendications 2, **caractérisée en ce que**, dans le vérin (114, 214, 314) de travail hydraulique, le premier espace (106, 206, 306) à fluide forme un espace de travail d'une tige et le deuxième espace (108, 208, 308) à fluide un espace de travail d'un piston dans une enveloppe (116, 216, 316) de vérin, qui sont séparés l'un de l'autre au moyen d'une unité tige-piston, comme partie (104, 204, 304) de commande.

4. Installation de commande de vanne de turbine suivant la revendication 3, **caractérisée en ce que**, pour fermer l'unité de vanne dans un fonctionnement fail-safe, l'unité (104, 204, 304) de tige-piston entre ou sort, en raison de la pression de fluide de l'accumulateur (112, 212, 312) hydraulique, de l'enveloppe du vérin, si la pression de fluide diminue dans le premier espace (106, 206, 306) à fluide.

5. Installation de commande de vanne de turbine suivant l'une des revendications précédentes, **caractérisée en ce que**, par le dispositif (136, 236, 336) de réglage de la pression, la pression du fluide dans le deuxième espace (108, 208, 308) à fluide peut être réglée entre une pression minimum et une pression maximum, de manière à ce que la partie (104, 204, 304) de commande se déplace lorsqu'il n'y a pas de pression dans le premier espace (106, 206, 306) à fluide dans le deuxième sens (GR) jusqu'à une position d'extrémité, un dépassement des forces d'entraînement admissibles étant empêché.

6. Installation de commande de vanne de turbine suivant la revendication 1, **caractérisée en ce que** la pression appliquée par l'accumulateur (112, 212, 312) hydraulique, comme accumulateur d'énergie, est réglable par le trajet de déplacement de la partie (104, 204, 304) de commande sur des courbes (4, 4') caractéristiques isobares sensiblement constantes.

7. Installation de commande de vanne de turbine suivant l'une des revendications précédentes, **caractérisée en ce qu'**au moyen d'un dispositif (150, 250, 350) de mesure de trajet, la position de la partie (104, 204, 304) de commande peut être détectée et ainsi la pression de consigne dans le deuxième espace (108, 208, 308) à fluide peut être déterminée.

8. Installation de commande de vanne de turbine suivant l'une des revendications précédentes, **caractérisée en ce que** le dispositif (110, 210, 310) d'alimentation du premier espace (106, 206, 306) à fluide comprend une pompe (120, 320) à pistons axiaux à réglage de l'angle de pivotement ou une pompe (220) à engrenages à volume déplacé constant dans un circuit de charge d'accumulateur et le dispositif (117, 217, 317) de mise en position a une vanne (128, 328) à fonctionnement continu ou une vanne (228) de commande.

9. Installation de commande de vanne de turbine suivant l'une des revendications précédentes, **caractérisée en ce qu'**une pression du fluide dans le premier espace (106, 206, 306) à fluide peut être détendue de manière contrôlée par une commande (140, 240, 340) de sécurité, ayant de préférence un agencement (141, 241, 341) remplaçable de vanne de commande et une vanne (142, 242, 342) de sécurité.

10. Installation de commande de vanne de turbine suivant la revendication 9, **caractérisée en ce que** l'installation (141, 241, 341) de vanne de commande est réalisée suivant une logique n de m, de préférence suivant une logique 1 de 2 ou suivant une logique 2 de 3 et permet, en outre, de préférence un test de course partielle.
